# EUROPÄISCHE PATENTANMELDUNG

(11) **EP 4 810 824 A1**
(43) Veröffentlichungstag der Anmeldung: **23.09.2026**
(21) Anmeldenummer: 26162520.6
(22) Anmeldetag: 05.03.2026
(51) Int. Cl.: F16G 13/07, B62D 55/088, F16J 15/34, F16G 13/06

(54) **KETTENBOLZENDICHTUNG FÜR EINE KETTE ZUR ANWENDUNG IN DER FÖRDERTECHNIK UND/ODER ANTRIEBSTECHNIK, DICHTUNGSANORDNUNG MIT EINER SOLCHEN KETTENBOLZENDICHTUNG, VERWENDUNG EINER SOLCHEN KETTENBOLZENDICHTUNG, KETTE MIT EINER SOLCHEN DICHTUNGSANORDNUNG**

(30) Priorität: 20.03.2025 DE 102025110747
(71) Anmelder: Carl Freudenberg KG, 69469 Weinheim (DE)
(72) Erfinder: Näser, Hartmut, 34613 Schwalmstadt (DE); Barillas, Gonzalo, 36304 Alsfeld-Altenburg (DE)

(57) **Zusammenfassung**

Die Erfindung betrifft eine Kettenbolzendichtung (1) für eine Kette zur Anwendung in der Fördertechnik und/oder Antriebstechnik, wobei die Kettenbolzendichtung (1) einen Dichtbereich (13) und einen Stützbereich (14) aufweist, wobei der Dichtbereich (13) und der Stützbereich (14) einteilig und stoffeinheitlich ausgebildet sind, wobei die Kettenbolzendichtung (1) in ihrem Querschnitt symmetrisch ausgebildet ist, wobei der Dichtbereich (13) zumindest zwei Dichtlippen (2) mit jeweils mindestens einer von der Dichtlippe (2) abragenden Dichtkante (3) aufweist. Die Erfindung betrifft ferner eine Dichtungsanordnung (7) mit einer solchen Kettenbolzendichtung (1), eine Verwendung einer solchen Kettenbolzendichtung (1) sowie eine Kette (12) mit einer solchen Dichtungsanordnung (7).

## Beschreibung

Die Erfindung betrifft eine Kettenbolzendichtung für eine Kette zur Anwendung in der Fördertechnik und/oder Antriebstechnik, wobei die Kettenbolzendichtung einen Dichtbereich und einen Stützbereich aufweist, wobei der Dichtbereich und der Stützbereich einteilig und stoffeinheitlich ausgebildet sind, wobei die Kettenbolzendichtung in ihrem Querschnitt symmetrisch ausgebildet ist.

### Technisches Gebiet

Kettenbolzendichtungen werden für Ketten verwendet, die insbesondere in den Bereichen Materialtransport, Fördertechnik, für Transportbänder, Antriebsketten, Kettenrollen, Baggerketten, in Steinbruchanwendungen und im Bergbau Anwendung finden. Bei diesen Anwendungsgebieten weist die Umgebung einen erhöhten Schmutz- und Staubgehalt auf. Die dort verwendeten Ketten umfassen zumeist ein Kettenaußenglied, ein Ketteninnenglied, einen Kettenbolzen sowie eine Gelenkbuchse. Der Kettenbolzen verbindet dabei Kettenglieder miteinander, also Kettenaußenglieder mit Ketteninnengliedern.

Damit sich Kettenaußenglieder und Kettenbolzen relativ zu Ketteninnengliedern und Gelenkbuchsen drehen können, werden Schmierstoffe, beispielsweise Öl oder Fett, hinzugefügt, um die Drehbewegung zu erleichtern, mechanischen Abrieb der Bauteile an den Berührungsflächen zu verringern und somit die Lebensdauer der Ketten zu verlängern. Um den zur Schmierung benötigten Schmierstoff zwischen Kettenbolzen und Gelenkbuchse zu halten, werden Kettenbolzendichtungen auf dem Kettenbolzen installiert. Dabei soll zum einen vermieden werden, dass Schmierstoff in die Umgebung austritt und die Umgebung verunreinigt. Zum anderen soll vermieden werden, dass Schmutzpartikel zwischen Kettenbolzen und Gelenkbuchse gelangen und die Funktion der Kette negativ beeinträchtigen.

### Stand der Technik

Die Dichtungsfunktion bekannter Kettenbolzendichtungen basiert auf einem dynamisch dichtenden Element aus hartem Material und einem elastischen Element aus Elastomermaterial, das Toleranzen, Verschleiß und Materialrelaxation ausgleicht. Auch ein Metallring zur Stabilisierung kann enthalten sein. Derartige Kettenbolzendichtungen sind mehrteilig ausgestaltet und beispielsweise aus der US 8,985,590 B2 bekannt.

### Darstellung der Erfindung

Der Erfindung liegt die Aufgabe zugrunde, eine Kettenbolzendichtung bereitzustellen, welche eine verbesserte Handhabbarkeit und Dichtwirkung aufweist. Der Erfindung liegt zudem die Aufgabe zugrunde, eine Dichtungsanordnung und eine Kette sowie eine Verwendung einer Kettenbolzendichtung anzugeben, welche eine verbesserte Handhabbarkeit und Dichtwirkung aufweisen.

Die Aufgabe wird mit den Merkmalen Anspruch 1 gelöst. Auf vorteilhafte Ausgestaltungen nehmen die Unteransprüche Bezug.

Die erfindungsgemäße Kettenbolzendichtung für eine Kette zur Anwendung in der Fördertechnik und/oder Antriebstechnik weist einen Dichtbereich und einen Stützbereich auf, wobei der Dichtbereich und der Stützbereich einteilig und stoffeinheitlich ausgebildet sind, wobei die Kettenbolzendichtung in ihrem Querschnitt symmetrisch ausgebildet ist, wobei der Dichtbereich zumindest zwei Dichtlippen mit jeweils mindestens einer von der Dichtlippe abragenden Dichtkante aufweist.

Die Kettenbolzendichtung ist ringförmig um eine Längsachse ausgestaltet, wobei die Längsachse zentriert zu der Kettenbolzendichtung angeordnet ist. Die Kettenbolzendichtung ist achsensymmetrisch zu einer Radialebene ausgebildet, wobei die Längsachse orthogonal zur der Radialebene verläuft. Die Radialebene verläuft somit mittig durch die Kettenbolzendichtung. Die Kettenbolzendichtung ist somit in ihrem Querschnitt symmetrisch zu der Radialebene ausgebildet. Durch die Achsensymmetrie ist der Einbau der Kettenbolzendichtung wesentlich vereinfacht und die Gefahr von Montagefehlern durch Verwechslung der Einbaurichtung wird vermieden. Insofern lässt sich die Handhabbarkeit verbessern. Die Kettenbolzendichtung wird für Ketten in den Bereichen Materialtransport, Fördertechnik, Transportbänder, Baggerketten und Bergbau verwendet und ist erfindungsgemäß einteilig und stoffeinheitlich ausgebildet. Durch die einteilige und stoffeinheitliche Ausbildung des Dichtbereichs und des Stützbereichs sowie der Kettenbolzendichtung besteht die Kettenbolzendichtung aus einem einzigen Bauteil. Dadurch wird der Zeitaufwand des Montageprozesses reduziert, da ein Zusammenbau mehrere Einzelkomponenten der Kettenbolzendichtung nicht nötig ist. Die einteilige Ausgestaltung erhöht gleichzeitig die Prozesssicherheit des Montageprozesses, da fehlerhafte Zusammenbauten der Kettenbolzendichtung vermieden werden.

Der Stützbereich kann als Grundkörper ausgebildet sein, wobei die Dichtlippen von dem Grundkörper abragen können. Der Grundkörper ist vorzugsweise massiv ausgestaltet und hat eine Stützfunktion und die Dichtlippen haben eine Dichtfunktion. Eine erste Teilmenge der Dichtlippen ist in Bezug auf den Grundkörper radial innen und eine zweite Teilmenge der Dichtlippen ist radial außen angeordnet, wobei die radial innen angeordneten Dichtlippen im Wesentlichen radial nach innen abragen und die radial außen angeordneten Dichtlippen im Wesentlichen radial nach außen abragen. Im Falle von vier Dichtlippen sind zwei Dichtlippen in Bezug auf den Grundkörper radial innen und zwei Dichtlippen radial außen angeordnet.

Der Dichtbereich kann vier Dichtlippen aufweisen, wobei die Dichtlippen jeweils Dichtkanten aufweisen, wobei die Dichtkanten stufenweise angeordnet sind. Die Dichtkanten können kreisförmig und konzentrisch um die Längsachse der Kettenbolzendichtung angeordnet sein. Die Dichtkanten können auch eine andere Anordnung um die Längsachse der Kettenbolzendichtung aufweisen, beispielsweise wellenförmig, insbesondere sinusförmig, und nicht konzentrisch um die Längsachse der Kettenbolzendichtung. Dadurch kann eine Förderwirkung ermöglicht werden und insbesondere Schmiermittel in den abzudichtenden Raum zurückgefördert werden. Vorzugsweise kann jede Dichtlippe zwei oder drei Dichtkanten aufweisen. Besonders vorzugsweise kann jede Dichtlippe genau zwei Dichtkanten aufweisen, so dass die Kettenbolzendichtung insgesamt vier Dichtlippen und acht Dichtkanten aufweist. Die Dichtkanten sind an den jeweiligen Dichtlippen radial und axial versetzt, also stufenweise, angeordnet. Im Falle von zwei Dichtkanten pro Dichtlippe können die Dichtkanten der zweiten Stufe im entspannten Zustand vor der Montage der Kettenbolzendichtung axial und/oder radial näher an dem Grundkörper der Kettenbolzendichtung angeordneten sein im Vergleich zu den Dichtkanten der ersten Stufe. Diese Dichtkanten der zweiten Stufe können dann bei der Montage der Kettenbolzendichtung durch Verformung der Dichtlippen zur Anlage an entsprechende Oberflächen gelangen. Durch die mehreren Dichtkanten wird die Dichtfunktion der Kettenbolzendichtung an mehreren Stellen ausgeführt. Durch diese Redundanz der Dichtfunktion wird die Dichtwirkung verbessert. Alternativ kann die Dichtkante der zweiten Stufe einer Dichtlippe bei Verschleiß der jeweiligen Dichtkanten der ersten Stufe dieser Dichtlippe zur Anlage an entsprechenden Oberflächen gelangen und eine Dichtfunktion ausführen. Dadurch kann die Lebensdauer der Kettenbolzendichtung insgesamt verlängert werden. Der Bereich zwischen den radial innenliegenden und den radial außenliegenden Dichtkanten kann mit Schmierstoff versehen werden. Dadurch kann die Laufzeit der Dichtung erhöht werden.

Die Kettenbolzendichtung kann entlang ihrer Symmetrielinie einen vorstehenden Wulst aufweisen, wobei der Wulst zwischen zwei Dichtlippen angeordnet ist. Vorzugsweise ist der Wulst zwischen den zwei radial nach außen abragenden Dichtlippen angeordnet. Der Wulst ist vorzugweise radial nach außen an der Kettenbolzendichtung angeordnet. Bevorzugt ist der Wulst an dem Grundkörper angeordnet. Der Wulst ist als konvexe Auswölbung der Kettenbolzendichtung ausgebildet. Mittels des Wulstes wird der Zwischenraum zwischen den radial nach außen abragenden Dichtlippen reduziert. Dies führt dazu, dass das an Grundkörper und Dichtlippen angrenzende Volumen reduziert wird und für mögliche Schmutzpartikel weniger Raum zur Verfügung steht, so dass die Dichtfunktion weiter verbessert wird. Insbesondere kann verhindert werden, dass größere Partikel in den Zwischenraum gelangen und sich dort anlagern, die zu einer Beschädigung der Dichtlippen führen können.

Die Kettenbolzendichtung kann aus einem thermoplastischen Kunststoff bestehen. Vorzugsweise kann die Kettenbolzendichtung aus einem thermoplastischen Polyurethan bestehen. Thermoplastische Polyurethane zeichnen sich durch ein ausgezeichnetes Verschleißverhalten, außergewöhnlich hohe Reißfestigkeit, hohe Elastizität im gesamten Härtebereich und gute Beständigkeit gegen energiereiche Strahlen aus. Thermoplastische Polyurethane sind ferner beständig gegen Sauerstoff, Ozon, Mineralöle- und fette. Durch Verwendung dieses Werkstoffs wird ein formstabiler Grundkörper bei gleichzeitig elastischen Dichtlippen erreicht, wodurch die Dichtfunktion weiter verbessert werden kann.

Die der Erfindung zugrundeliegende Aufgabe wird auch durch eine Dichtungsanordnung für eine Kette zur Anwendung in der Fördertechnik und/oder Antriebstechnik gelöst, umfassend zumindest ein Kettenaußenglied, zumindest eine Gelenkbuchse und zumindest einen Kettenbolzen sowie eine beschriebene Kettenbolzendichtung, wobei die Kettenbolzendichtung den Spalt zwischen einem Kettenaußenglied und einer Gelenkbuchse dichtet. Die Dichtungsanordnung kann ferner ein Ketteninnenglied umfassen. Ein Kettenbolzen verbindet dabei Kettenglieder miteinander, also jeweils Kettenaußenglieder mit Ketteninnengliedern. Kettenbolzendichtungen werden an dem Kettenbolzen installiert, um den zur Schmierung benötigten Schmierstoff, beispielsweise Öl oder Fett, zwischen Kettenbolzen und Gelenkbuchse zu halten und Leckage aber auch Verunreinigungen des Schmierstoffs zu vermeiden. Kettenaußenglieder, Kettenbolzen, Ketteninnenglieder und Gelenkbuchsen sind drehbar um eine Längsachse des Kettenbolzens angeordnet. Dabei sind Kettenaußenglieder und Kettenbolzen relativ zu Ketteninnengliedern und Gelenkbuchsen drehbar angeordnet. In bestimmten Anwendungsfällen wird durch die geometrische Ausgestaltung der Bauteile keine komplette Drehung der Kettenaußenglieder und Kettenbolzen relativ zu Ketteninnengliedern und Gelenkbuchsen ermöglicht, sondern lediglich eine Schwenkbewegung, wohingegen in anderen Anwendungsfällen komplette Drehungen ermöglicht werden.

In vorteilhafter Weise ist vorgesehen, dass die Kettenbolzendichtung mit elastischer Vorspannung an dem Kettenaußenglied und/oder der Gelenkbuchse anliegt. Durch die elastische Vorspannung werden die Dichtlippen mit den Dichtkanten an das Kettenaußenglied und/oder die Gelenkbuchse gedrückt, so dass die Dichtwirkung weiter verbessert wird. Eine derartige Vorspannung wird durch ein axiales Verpressen des Kettenaußenglieds und der Gelenkbuchse sowie der dazwischen angeordneten Kettenbolzendichtung erreicht. Die axiale Verpressung der Kettenbolzendichtung wird durch die Dichtlippen aufgenommen, so dass der Grundkörper der Kettenbolzendichtung nicht verpresst wird.

Nach einer vorteilhaften Ausgestaltung der Erfindung ist vorgesehen, dass die dem Kettenaußenglied zugewandten Dichtlippen der Kettenbolzendichtung an dem Kettenaußenglied anliegen, und die der Gelenkbuchse zugewandten Dichtlippen der Kettenbolzendichtung an der Gelenkbuchse anliegen. Dabei liegen die Dichtlippen an einer Stirnseite der Gelenkbuchse an. Die axial verpressten Dichtlippen dichten dabei Stirnflächen der Gelenkbuchse und des Kettenaußengliedes so ab, dass keine Schmutzpartikel in die Dichtungsanordnung eindringen können und keine Schmierstoffen aus der Dichtungsanordnung verloren gehen. Die Dichtungsanordnung kann einen Abstandshalter umfassen, wobei der Abstandshalter vorzugsweise ringförmig ausgestaltet ist. Vorzugsweise ist der Abstandshalter aus einem metallischen Werkstoff ausgebildet. Weiterhin vorzugsweise ist der Abstandshalter aus einem zähharten Werkstoff ausgebildet. Der Abstandshalter weist vorzugsweise eine hohe Härte auf, wobei die Härte höher ist als die Härte der angrenzenden Bauteile, insbesondere des Kettenaußengliedes und der Gelenkbuchse.

Vorzugsweise ist der Abstandshalter in axialer Richtung zwischen dem Kettenaußenglied und der Gelenkbuchse angeordnet. Der Abstandshalter kann beispielsweise als Buchse ausgestaltet sein und als Anschlag für Kettenaußenglied und Gelenkbuchse dienen. Dazu ist der Abstandshalter derart dimensioniert, dass das Kettenaußenglied und die Gelenkbuchse durch den Abstandshalter voneinander in axialer Richtung beabstandet sind. Dadurch wird erreicht, dass beim Verpressen von Kettenaußenglied, Kettenbolzendichtung und Gelenkbuchse die Kettenbolzendichtung nur bis zu einem definierten Maß gestaucht werden kann, nämlich bis zu dem axialen Maß des Abstandshalters. Dadurch können Schäden an der Kettenbolzendichtung durch übermäßiges Verpressen verhindert werden. Zudem ist der Abstandshalter so dimensioniert, dass eine Berührung von Kettenaußenglied und Gelenkbuchse über ihre jeweiligen radialen Ausgestaltungen verhindert wird.

Die der Erfindung zugrundeliegende Aufgabe wird auch durch eine Verwendung einer beschriebenen Kettenbolzendichtung in einer Kette zur Anwendung in der Fördertechnik gelöst. Die beschriebene Kettenbolzendichtung kann aber auch in einer Kette in den Bereichen Materialtransport, für Transportbänder, Antriebsketten, Kettenrollen, Baggerketten, in Steinbruchanwendungen und/oder im Bergbau verwendet werden.

Die der Erfindung zugrundeliegende Aufgabe wird auch durch eine Kette zur Anwendung in der Fördertechnik gelöst, umfassend eine beschriebene Dichtungsanordnung.

### Kurzbeschreibung der Zeichnung

Ausgestaltungen der erfindungsgemäßen Kettenbolzendichtung, Dichtungsanordnung sowie Kette wird nachfolgend anhand der Figuren näher erläutert. Diese zeigen, jeweils schematisch:
- Fig. 1: eine Schnittansicht einer Kettenbolzendichtung;
- Fig. 2: eine Schnittansicht einer Dichtungsanordnung für eine Kette, umfassend eine Kettenbolzendichtung nach Figur 1;
- Fig. 3: eine perspektivische Ansicht eines Kettenabschnitts, umfassend eine Dichtungsanordnung nach Figur 2.

### Ausführung der Erfindung

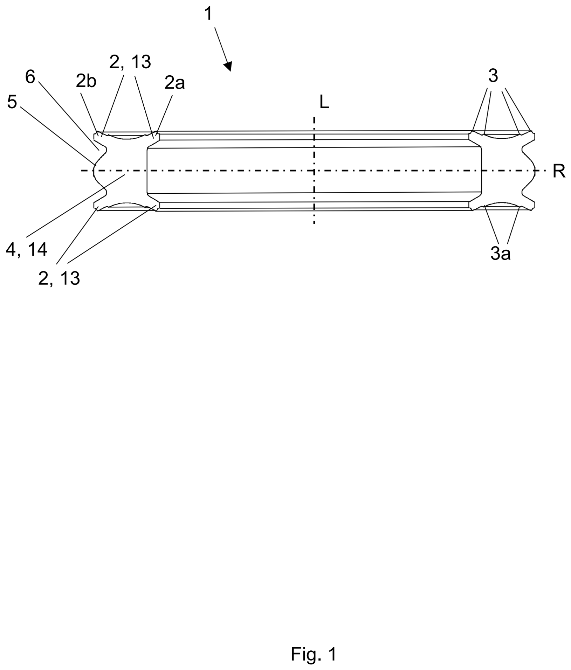

**Figur 1** zeigt eine Kettenbolzendichtung 1 in einer Schnittansicht, wobei die Kettenbolzendichtung 1 einen Dichtbereich 13 und einen Stützbereich 14 aufweist, wobei der Dichtbereich 13 als Dichtung ausgebildet ist und wobei der Stützbereich 14 als Stützelement ausgebildet ist. Der Dichtbereich 13 und der Stützbereich 14 sowie die Kettenbolzendichtung 1 als solche sind einteilig und stoffeinheitlich ausgebildet.

Die Kettenbolzendichtung 1 ist ringförmig um eine Längsachse L ausgestaltet. Die Kettenbolzendichtung 1 ist achsensymmetrisch zu einer Radialebene R ausgebildet, wobei die Längsachse L orthogonal zur der Radialebene R und die Radialebene R mittig durch die Kettenbolzendichtung 1 verläuft.

Der Stützbereich14 ist als Grundkörper 4 ausgebildet und die Dichtlippen 2 ragen von dem Grundkörper 4 ab. Der den Stützbereich14 bildende Grundkörper 4 ist aus Vollmaterial massiv ausgestaltet und hat eine Stützfunktion. Die den Dichtbereich 13 bildenden Dichtlippen 2 haben eine Dichtfunktion.

Der Dichtbereich 13 weist vier Dichtlippen 2 auf. Zwei Dichtlippen 2a sind in Bezug auf den Grundkörper 4 radial innen und zwei Dichtlippen 2b sind radial außen angeordnet, wobei die radial innen angeordneten Dichtlippen 2a im Wesentlichen radial nach innen abragen und die radial außen angeordneten Dichtlippen 2b im Wesentlichen radial nach außen abragen.

Die Dichtlippen 2 weisen jeweils zwei Dichtkanten 3 auf. Somit weist die Kettenbolzendichtung 1 insgesamt vier Dichtlippen 2 und acht Dichtkanten 3 auf. Die Dichtkanten 3 sind stufenweise angeordnet. In dieser Ausgestaltung sind die Dichtkanten 3 kreisförmig und konzentrisch um die Längsachse L der Kettenbolzendichtung 1 angeordnet. In einer alternativen Ausgestaltung können die Dichtkanten 3 eine andere Anordnung um die Längsachse L der Kettenbolzendichtung 1 aufweisen, beispielsweise wellenförmig, insbesondere sinusförmig, und nicht konzentrisch um die Längsachse L der Kettenbolzendichtung 1. Die Dichtkanten 3 an den jeweiligen Dichtlippen 2 sind radial und axial versetzt, also stufenweise, angeordnet. Dabei sind die jeweils versetzt angeordnet Dichtkanten 3a im entspannten Zustand vor der Montage der Kettenbolzendichtung 1 axial und/oder radial näher an dem Grundkörper 4 der Kettenbolzendichtung 1 angeordneten. Diese jeweiligen näher an dem Grundkörper 4 angeordneten Dichtkanten 3a gelangen bei der Montage der Kettenbolzendichtung 1 durch Verformung der Dichtlippen 2 zur Anlage an entsprechende Oberflächen. Durch die mehreren Dichtkanten 3 wird die Dichtfunktion der Kettenbolzendichtung 1 an mehreren Stellen ausgeführt.

Die Kettenbolzendichtung 1 weist entlang ihrer Symmetrielinie (also der Radialebene R) ein vorstehender Wulst 5 auf, wobei der Wulst 5 zwischen zwei Dichtlippen 2 angeordnet ist. Der Wulst ist zwischen den zwei radial nach außen abragenden Dichtlippen 2 angeordnet. Der Wulst 5 ist radial nach außen an der Kettenbolzendichtung 1 angeordnet. Der Wulst 5 ist als konvexe Auswölbung der Kettenbolzendichtung 1 ausgebildet. Mittels des Wulstes 5 wird der Freiraum 6 zwischen den radial nach außen abragenden Dichtlippen 2 reduziert.

Die Kettenbolzendichtung 1 besteht aus einem thermoplastischen Kunststoff, genauer einem thermoplastischen Polyurethan.

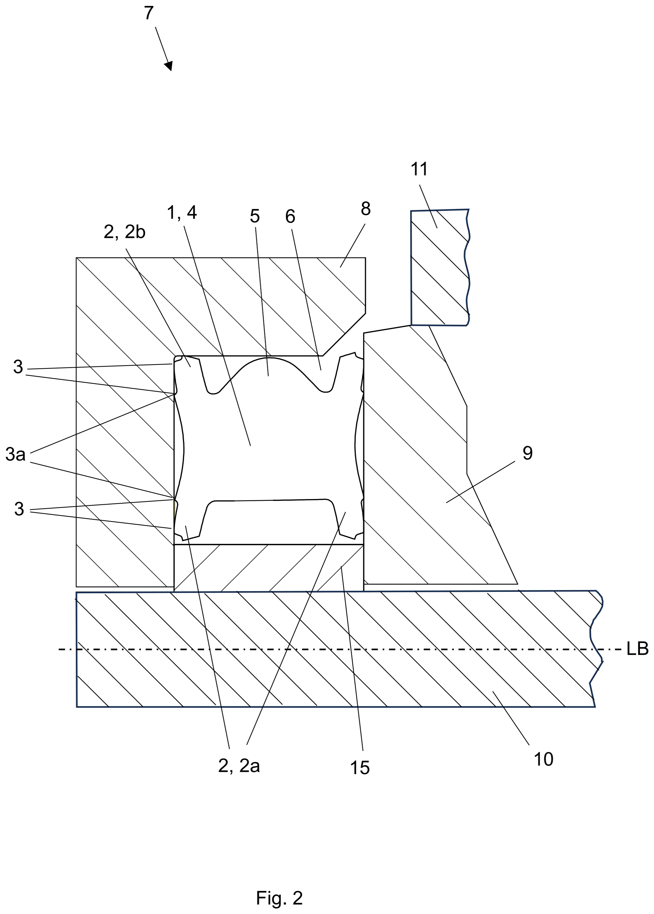

**Figur 2** zeigt eine Dichtungsanordnung 7 in Schnittansicht, umfassend ein Kettenaußenglied 8, eine Gelenkbuchse 9 und einen Kettenbolzen 10 sowie einen Abstandshalter 15 und in **Figur 1** gezeigte Kettenbolzendichtung 1. Die Kettenbolzendichtung 1 dichtet den Spalt zwischen dem Kettenaußenglied 8 und der Gelenkbuchse 9. Die Dichtungsanordnung 7 umfasst ferner ein Ketteninnenglied 11. Die Dichtungsanordnung 7 ist Teil einer Kette 12, wobei Ketteninnenglied 8, Gelenkbuchse 9 und Kettenbolzen 10 zur besseren Darstellbarkeit jeweils nur teilweise dargestellt sind. Der Kettenbolzen 10 verbindet dabei das Kettenaußenglied 8 mit dem Ketteninnenglied 11. Kettenaußenglieder 8, Kettenbolzen 10, Ketteninnenglieder 11 und Gelenkbuchsen 9 sind drehbar um eine Längsachse LB des Kettenbolzens 10 angeordnet. Dabei ist das Kettenaußenglied 8 und der Kettenbolzen 10 relativ zu dem Ketteninnenglied 11 und der Gelenkbuchse 9 drehbar angeordnet, wobei durch die geometrische Ausgestaltung der Bauteile keine komplette Drehung sondern eine Schwenkbewegung ermöglicht wird.

Die Kettenbolzendichtung 1 liegt mit elastischer Vorspannung an dem Kettenaußenglied 8 und der Gelenkbuchse 9 an. Durch die elastische Vorspannung werden die Dichtlippen 2 mit den Dichtkanten 3 an das Kettenaußenglied 8 und die Gelenkbuchse 9 gedrückt, so dass die Dichtwirkung weiter verbessert wird. Eine derartige Vorspannung wird durch ein axiales Verpressen des Kettenaußenglieds 8 und der Gelenkbuchse 9 sowie der dazwischen angeordneten Kettenbolzendichtung 1 erreicht. Die axiale Verpressung der Kettenbolzendichtung 1 wird durch die Dichtlippen 2 aufgenommen, so dass der Grundkörper 4 der Kettenbolzendichtung 1 nicht verpresst wird.

Die dem Kettenaußenglied 8 zugewandten Dichtlippen 2 der Kettenbolzendichtung 1 liegen an dem Kettenaußenglied 8 an, und die der Gelenkbuchse 9 zugewandten Dichtlippen 2 der Kettenbolzendichtung 1 liegen an der Gelenkbuchse 9 an. Die axial verpressten Dichtlippen 2 dichten dabei Stirnflächen der Gelenkbuchse 9 und des Kettenaußengliedes 8 so ab, dass keine Schmutzpartikel in die Dichtungsanordnung 7 eindringen können und keine Schmierstoffen aus der Dichtungsanordnung 7 verloren gehen.

Die Dichtungsanordnung 7 umfasst einen Abstandshalter 15, wobei der Abstandshalter 15 ringförmig ausgestaltet ist. Der Abstandshalter 15 ist aus einem metallischen und zähharten Werkstoff ausgebildet. Der Abstandshalter 15 weist eine hohe Härte auf, wobei die Härte jeweils höher ist als die Härte der angrenzenden Bauteile Kettenaußenglied 8 und Gelenkbuchse 9.

Der Abstandshalter 9 ist in axialer Richtung zwischen dem Kettenaußenglied 8 und der Gelenkbuchse 9 und radial unterhalb der Kettenbolzendichtung 1 angeordnet. Der Abstandshalter 15 ist als Buchse ausgestaltet und dient als Anschlag für Kettenaußenglied 8 und Gelenkbuchse 9. Dazu ist der Abstandshalter 15 derart dimensioniert, dass das Kettenaußenglied 8 und die Gelenkbuchse 9 durch den Abstandshalter 15 voneinander in axialer Richtung beabstandet sind. Dadurch wird erreicht, dass beim Verpressen von Kettenaußenglied 8, Kettenbolzendichtung 1 und Gelenkbuchse 9 die Kettenbolzendichtung 1 nur bis zu einem definierten Maß gestaucht werden kann, nämlich bis zu dem axialen Maß des Abstandshalters 15. Dadurch können Schäden an der Kettenbolzendichtung 1 durch übermäßiges Verpressen verhindert werden. Zudem ist der Abstandshalter 15 so dimensioniert, dass eine Berührung von Kettenaußenglied 8 und Gelenkbuchse 9 über ihre jeweiligen radialen Ausgestaltungen verhindert wird.

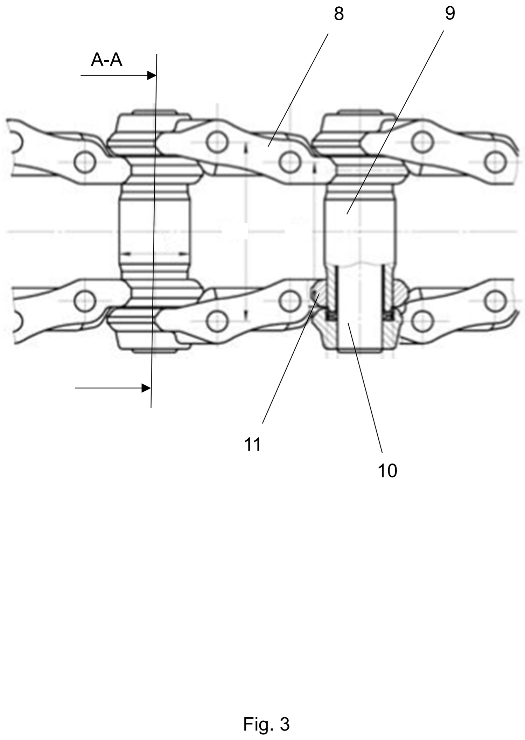

**Figur 3** zeigt eine Kette 12, umfassend eine in **Figur 2** gezeigte Dichtungsanordnung. Die Kettenbolzendichtung 1 der Dichtungsanordnung ist aufgrund der Einbausituation in **Figur 3** nicht sichtbar. Die Schnittansicht der **Figur 2** liegt in der in **Figur 3** dargestellten Schnittebene A-A .

## Patentansprüche

1. Kettenbolzendichtung (1) für eine Kette zur Anwendung in der Fördertechnik und/oder Antriebstechnik, wobei die Kettenbolzendichtung (1) einen Dichtbereich (13) und einen Stützbereich (14) aufweist, wobei der Dichtbereich (13) und der Stützbereich (14) einteilig und stoffeinheitlich ausgebildet sind, wobei die Kettenbolzendichtung (1) in ihrem Querschnitt symmetrisch ausgebildet ist, wobei der Dichtbereich (13) zumindest zwei Dichtlippen (2) mit jeweils mindestens einer von der Dichtlippe (2) abragenden Dichtkante (3) aufweist.

2. Kettenbolzendichtung (1) nach Anspruch 1, **dadurch gekennzeichnet, dass** der Stützbereich (14) als Grundkörper (4) ausgebildet ist, wobei die Dichtlippen (2) von dem Grundkörper (4) abragen.

3. Kettenbolzendichtung (1) nach Anspruch 1 oder 2, **dadurch gekennzeichnet, dass** der Dichtbereich (13) vier Dichtlippen (2) aufweist, wobei die Dichtlippen (2) jeweils zwei Dichtkanten (3) aufweisen, wobei die Dichtkanten (3) stufenweise angeordnet sind.

4. Kettenbolzendichtung (1) nach einem der Ansprüche 1 bis 3, **dadurch gekennzeichnet, dass** die Kettenbolzendichtung (1) entlang ihrer Symmetrielinie einen vorstehenden Wulst (5) aufweist, wobei der Wulst (5) zwischen zwei Dichtlippen (2) angeordnet ist.

5. Kettenbolzendichtung (1) nach einem der Ansprüche 1 bis 4, **dadurch gekennzeichnet, dass** die Kettenbolzendichtung (1) aus einem thermoplastischen Kunststoff, insbesondere aus einem thermoplastischen Polyurethan, besteht.

6. Dichtungsanordnung (7) für eine Kette zur Anwendung in der Fördertechnik und/oder Antriebstechnik, umfassend zumindest ein Kettenaußenglied (8) , zumindest eine Gelenkbuchse (9) und zumindest einen Kettenbolzen (10) sowie eine Kettenbolzendichtung (1) nach einem der Ansprüche 1 bis 5, wobei die Kettenbolzendichtung (1) den Spalt zwischen einem Kettenaußenglied (8) und einer Gelenkbuchse (9) dichtet.

7. Dichtungsanordnung (7) nach Anspruch 6, **dadurch gekennzeichnet, dass** die Dichtungsanordnung (7) einen Abstandshalter (15) umfasst, wobei der Abstandshalter (15) ringförmig ausgestaltet ist, wobei der Abstandshalter (15) in axialer Richtung zwischen dem Kettenaußenglied (8) und der Gelenkbuchse (9) angeordnet ist.

8. Dichtungsanordnung (7) nach Anspruch 6 oder 7, **dadurch gekennzeichnet, dass** die Dichtungsanordnung (7) ein Ketteninnenglied (11) umfasst.

9. Dichtungsanordnung (7) nach einem der Ansprüche 6 bis 8, **dadurch gekennzeichnet, dass** die Kettenbolzendichtung (1) mit elastischer Vorspannung an dem Kettenaußenglied (8) und/oder der Gelenkbuchse (9) anliegt.

10. Dichtungsanordnung (7) nach Anspruch 9, **dadurch gekennzeichnet, dass** die dem Kettenaußenglied (8) zugewandten Dichtlippen (2) der Kettenbolzendichtung (1) an dem Kettenaußenglied (8) anliegen, und dass die der Gelenkbuchse (9) zugewandten Dichtlippen (2) der Kettenbolzendichtung (1) an der Gelenkbuchse (9) anliegen.

11. Verwendung einer Kettenbolzendichtung (1) nach einem der Ansprüche 1 bis 5 in einer Kette zur Anwendung in der Fördertechnik und/oder Antriebstechnik.

12. Kette (12) zur Anwendung in der Fördertechnik und/oder Antriebstechnik, umfassend eine Dichtungsanordnung (7) nach einem der Ansprüche 6 bis 10.
